# EUROPÄISCHE PATENTANMELDUNG

(11) **EP 1 927 929 A1**
(43) Veröffentlichungstag der Anmeldung: **04.06.2008**
(21) Anmeldenummer: 06024844.0
(22) Anmeldetag: 30.11.2006
(51) Int. Cl.: G06F 21/00

(54) **Verfahren zur Vergabe von Zugriffsrechten**

(71) Anmelder: SIEMENS AKTIENGESELLSCHAFT, 80333 München (DE)
(72) Erfinder: Gussmann, Klaus-Peter, 76187 Karlsruhe (DE); Kästner, Jan, 76344 Eggenstein (DE); Kienlen, Michel, 67630 Scheibenhard (FR)

(57) **Zusammenfassung**

Es wird ein Verfahren zur Vergabe von Zugriffsrechten in einem Teilnehmernetz (1) vorgeschlagen, welches mehrere miteinander verbundene Teilnehmer (3, 4, 5) umfasst. Um die Vergabe von Zugriffsrechten zu vereinfachen ist vorgesehen, dass jeder Teilnehmer (4, 5), welcher Zugriffsrechte benötigt, einem Teilnehmer (3), der zur Vergabe von Zugriffsrechten aktiviert ist, eine Zugriffsrechte-Anforderung mit Zugriffsrechte-Einstellungen (16) übermittelt und dass der aktivierte Teilnehmer (3) die Zugriffsrechte-Einstellungen (16) prüft und jedem Teilnehmer (4, 5), welcher dem aktivierten Teilnehmer (3) eine Zugriffsrechte-Anforderung übermittelte, eine Zugriffsvergabe-Quittung mit Einstellungen (16) zum Einstellen der Zugriffsrechte in dem Teilnehmer (4, 5) zuführt.

## Beschreibung

Die Erfindung betrifft ein Verfahren zur Vergabe von Zugriffsrechten in einem Teilnehmernetz, welches mehrere miteinander verbundene Teilnehmer umfasst. Darüber hinaus betrifft die Erfindung ein Teilnehmernetz mit mehreren miteinander verbundenen Teilnehmern sowie einem Teilnehmer, welcher zum Einsatz in einem derartigen Teilnehmernetz geeignet ist.

Um beispielsweise einen Rechner in einem Rechnernetz vor einem unberechtigten Zugriff zu schützen, sind gewöhnlich entsprechende Schutzmechanismen im Betriebssystem dieses Rechners vorgesehen. Zum Beispiel können eine so genannte Firewall aktiviert und/oder Zugriffsrechte für bestimmte Benutzer und/oder Benutzergruppen und/oder Programme vergeben werden. Die Vergabe von Zugriffsrechten und deren Handhabung sind äußerst komplex, insbesondere deshalb, weil sowohl rechner- als auch programmspezifische Einstellungen möglich sind.
Mehrere Rechner mit einem an sich bekannten Windows 98-, Windows 2000- und/oder Windows XP-Betriebssystem können zu einer Domäne zusammengefasst werden, wobei ein Administrator zentral mittels eines Servers z. B. festlegt, welche Benutzer sich mit welchem Passwort an der Domäne anmelden und auf welche Programme und/oder Dateien die Benutzer zugreifen können. Die entsprechenden Einstellungen werden an dem jeweiligen Rechner vorgenommen, wozu geeignete Werkzeuge des Betriebssystems genutzt werden. Nachteilig ist, dass ein Rechner der Domäne bekannt sein muss, damit Einstellungen des Rechners überhaupt wirksam sind. Falls ein Rechner der Domäne nicht bekannt ist, wird ein Zugriff auf andere Rechner und/oder Server verhindert; es ist nicht möglich, Anwenderprogramme und/oder Dateien auf den Rechner zu laden.

Der vorliegenden Erfindung liegt die Aufgabe zugrunde, ein Verfahren der eingangs genannten Art anzugeben, das eine Vergabe von Zugriffsrechten vereinfacht. Darüber hinaus ist ein Teilnehmernetzwerk mit mehreren miteinander verbundenen Teilnehmern zu schaffen, welches eine vereinfachte Vergabe von Zugriffsrechten ermöglicht. Ferner ist ein geeigneter Teilnehmer für ein derartiges Teilnehmernetzwerk anzugeben.

Diese Aufgabe wird im Hinblick auf das Verfahren mit den im Patentanspruch 1, im Hinblick auf das Teilnehmernetz mit den im Anspruch 4 und im Hinblick auf den Teilnehmer mit den im Anspruch 7 angegebenen Maßnahmen gelöst.

Vorteilhaft ist, dass für alle im Teilnehmernetz verbundenen Teilnehmer unabhängig vom jeweiligen auf den Teilnehmern implementierten Betriebssystem die Vergabe von Zugriffsrechten ermöglicht wird. Ein Administrator kann jeden Teilnehmer zur Vergabe von Zugriffsrechten aktivieren, wobei auch Zugriffsrechte für neu mit dem Teilnehmernetz verbundene und somit zunächst für das Netz unbekannte Teilnehmer einfach einstellbar sind.

In einer Ausgestaltung der Erfindung ist vorgesehen, die Einstellungen in einer Datei zu hinterlegen. Der Teilnehmer, welcher Zugriffsrechte benötigt, übermittelt zunächst dem für die Vergabe von Zugriffsrechten aktivierten Teilnehmer eine Datei mit gewünschten Zugriffsrechte-Einstellungen. Der aktivierte Teilnehmer akzeptiert, ändert oder weist die gewünschten Einstellungen zurück, indem dieser Teilnehmer die in der Datei hinterlegten Einstellungen entsprechend modifiziert. Die in der Art und Weise modifizierte Datei führt der aktivierte Teilnehmer dem Teilnehmer zu und die in dieser Datei hinterlegten Zugriffsrechte werden in dem Teilnehmer eingestellt.

In einer weiteren Ausgestaltung der Erfindung sind die Einstellungen visualisierbar. Dadurch kann einerseits ein Anwender die gewünschten, auf einer Anzeigeeinheit visualisierten Zugriffsrechte einfach editieren und andererseits kann der Administrator die gewünschten und auf dem aktivierten Teilnehmer visuell dargestellten Zugriffsrechte leicht überprüfen, ggf. ändern. Darüber hinaus sind jederzeit die Einstellungen nachvollziehbar und reproduzierbar; Widersprüche in den Einstellungen lassen sich einfach feststellen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
Figur 1 ein Teilnehmernetzwerk und
Figur 2 eine Bedieneroberfläche eines Set-Up-Programms.

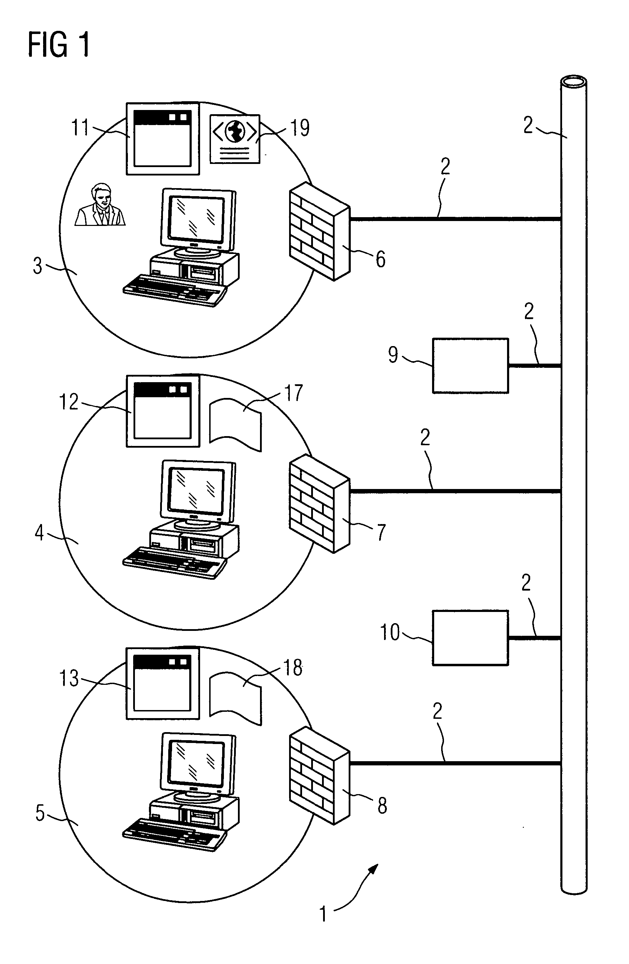

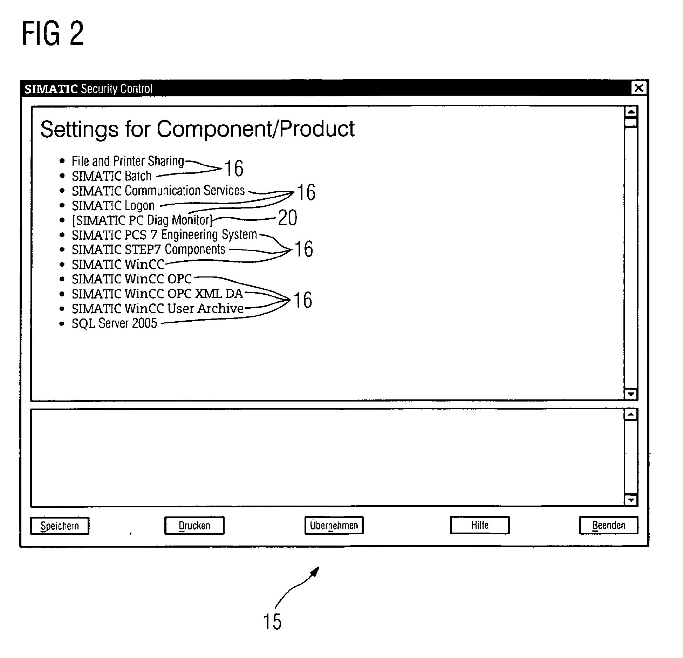

Die in den Figuren 1 und 2 dargestellten gleichen Teile sind mit gleichen Bezugszeichen versehen.

In Figur 1 ist mit 1 ein Teilnehmernetzwerk bezeichnet, welches mehrere über einen Bus 2 verbundene Teilnehmer 3, 4, 5 umfasst. Die Teilnehmer 3, 4, 5 können z. B. Bedien- und Beobachtungssysteme zum Bedienen und Beobachten eines zu steuernden technischen Prozesses, Engineeringsysteme zum Projektieren und/oder Konfigurieren einer technischen Anlage und/oder speicherprogrammierbare Steuerungen sein. Selbstverständlich kann das Teilnehmernetz mit weiteren Teilnehmern, z. B. Teilnehmer in Form von Windows-Rechnern, erweitert werden. Zum Schutz vor unberechtigten Zugriffen auf die Hard- und/oder Software der Teilnehmer 3, 4, 5 sind an sich bekannte Firewalls 6, 7, 8 vorgesehen.
Es wird im Folgenden angenommen, dass die Teilnehmer 4, 5 sowohl Zugriffsrechte auf bestimmte Hardware des Teilnehmernetzes, z. B. Hardware in Form eines Netzwerkdruckers 9, als auch Zugriffsrechte auf Programme, welche auf einem Applikationsserver 10 hinterlegt sind, benötigen. Ferner wird angenommen, dass ein Administrator zur Vergabe von Zugriffsrechten den Teilnehmer 3 auswählt und dazu diesen für eine Zugriffsrechte-Vergabe aktiviert. Die Teilnehmer 3, 4, 5 sind jeweils mit einem Set-Up-Programm 11, 12, 13 versehen, mittels denen die Teilnehmer 4, 5, welche Zugriffsrechte anforderten, die gewünschten Zugriffsrechte-Einstellungen eintragen und der Zugriffsrechte vergebende Teilnehmer 3 die von den Teilnehmern 4, 5 gewünschten Zugriffsrechte akzeptiert, ändert oder zurückweist. Bestandteil des jeweiligen Set-Up-Programms ist eine Bedieneroberfläche 15 (Figur 2), auf welcher Einstellungen 16 visuell in einer für einen Bediener bzw. Administrator lesbaren Form auf einer Anzeigeeinheit darstellbar sind. Bediener der Teilnehmer 4, 5 erstellen eine Zugriffsrechte-Anforderung, indem die Bediener zunächst die gewünschten Zugriffsrechte-Einstellungen mittels einer Tastatur editieren, wobei das jeweilige Set-Up-Programm 12, 13 die in entsprechende Eingabefelder der Bedieneroberfläche 15 eingetragenen Einstellungen in einer Datei 17, 18 hinterlegt. Diese Dateien 17, 18 sind jeweils mit einer Kennung versehen, welche ermöglicht, dass die Dateien 17, 18 die Firewalls 7, 8 passieren und dem Teilnehmer 3 übermittelt werden können. Der für die Zugriffsrechte-Vergabe aktivierte Teilnehmer 3 "sammelt" die gewünschten Einstellungen der übermittelten Dateien 17, 18 ein, wobei das Set-Up-Programm 11 des Teilnehmers 3 die gesammelten Einstellungen dem Administrator visuell in einer Liste 19 darstellt. Der Administrator prüft die gewünschten Zugriffsrechte und akzeptiert, ändert oder weist diese vollständig zurück. Dies kann z. B. in der Art und Weise bewirkt werden, dass der Administrator durch einen entsprechenden Mausklick oder durch eine vorgegebene Tastatureingabe die Einstellungen akzeptiert. Für den Fall, dass der Administrator beispielsweise die Einstellungen der Datei 17 vollständig akzeptiert, erstellt das Set-Up-Programm 11 eine Zugriffsvergabe-Quittung, indem das Set-Up-Programm 11 die Datei 17 mit einer Freigabekennung versieht und die Datei 17 dem Teilnehmer 3 übermittelt. Dessen Set-Up-Programm 12 stellt die Zugriffsrechte auf diesem Teilnehmer 3 ein bzw. installiert die Zugriffsrechte. Für den Fall, dass der Administrator beispielsweise die Einstellungen der Datei 18 nicht vollständig akzeptiert, ändert der Administrator die Einstellungen in der Art und Weise, dass er die Einstellungen löscht oder entsprechend als gelöscht markiert. Im vorliegenden Beispiel ist eine Einstellung 20 (Programmpaket "SIMATIC PC DiagMonitor") in eckige Klammern gesetzt und somit als gelöscht gekennzeichnet, was bedeutet, dass der Administrator einen Zugriff auf das auf dem Applikationsserver 10 hinterlegte Programmpaket "SIMATIC PC DiagMonitor" durch den Teilnehmer 5 verbietet. Das Set-Up-Programm 11 des Teilnehmers 3 übermittelt die Datei 18 mit den geänderten Einstellungen und einer Freigabekennung dem Teilnehmer 5, dessen Set-Up-Programm 12 die Zugriffsrechte auf diesem Teilnehmer 3 einstellt bzw. installiert. In der beschriebenen Art und Weise können alle gewünschten Zugriffsrechte vollständig zurückgewiesen werden, indem alle Einstellungen einer Datei gelöscht oder als gelöscht markiert einem Teilnehmer übermittelt und auf diesem installiert werden. Die Einstellungen können jederzeit geändert und neue Zugriffsrechte vergeben werden, indem zu einem späteren Zeitpunkt der Teilnehmer dem Teilnehmer 3 eine erneute Zugriffsrechte-Anforderung übermittelt, welche der Teilnehmer 3 erneut prüft und ggf. neue bzw. geänderte Zugriffsrechte vergibt.

Durch die Erfindung können Zugriffsrechte einfach vergeben und eingestellt werden. Die Erfindung lässt sich wie folgt kurz darstellen: In einem Schritt erstellen die Teilnehmer, die Zugriffsrechte benötigen, eine Datei mit den erforderlichen Einstellungen. In einem weiteren Schritt sammelt der Zugriffsrechte vergebende Teilnehmer alle Einstellungen ein, welche dieser Teilnehmer akzeptiert, modifiziert bzw. anpasst. In einem nächsten Schritt werden diese Einstellungen den Teilnehmern übermittelt und in diesen die Zugriffsrechte eingestellt.

## Patentansprüche

1. Verfahren zur Vergabe von Zugriffsrechten in einem Teilnehmernetz (1), welches mehrere miteinander verbundene Teilnehmer (3, 4, 5) umfasst, mit folgenden Verfahrensschritten:
- jeder Teilnehmer (4, 5), welcher Zugriffsrechte benötigt, übermittelt einem Teilnehmer (3), der zur Vergabe von Zugriffsrechten aktiviert ist, eine Zugriffsrechte-Anforderung mit Zugriffsrechte-Einstellungen (16),
- der aktivierte Teilnehmer (3) prüft die Zugriffsrechte-Einstellungen (16) und führt jedem Teilnehmer (4, 5), welcher dem aktivierten Teilnehmer (3) eine Zugriffsrechte-Anforderung übermittelte, eine Zugriffsvergabe-Quittung mit Einstellungen (16) zum Einstellen der Zugriffsrechte in dem Teilnehmer zu.

2. Verfahren nach Anspruch 1, **dadurch gekennzeichnet, dass** die Einstellungen (16) in einer Datei (17, 18) hinterlegt werden.

3. Verfahren nach Anspruch 1 oder 2, **dadurch gekennzeichnet, dass** die Einstellungen (16) visualisiert werden.

4. Teilnehmernetz mit mehreren miteinander verbundenen Teilnehmern (3, 4, 5), wobei zur Vergabe von Zugriffsrechten
- jeder Teilnehmer mit Mitteln (12, 13) versehen ist, welche einem aktivierten Teilnehmer (3) eine Zugriffsrechte-Anforderung mit Zugriffsrechte-Einstellungen (16) übermitteln,
- jeder Teilnehmer Mittel (11) aufweist, welche zur Aktivierung des Teilnehmers (3) im Hinblick auf die Vergabe von Zugriffsrechten vorgesehen sind, wobei die Mittel (11) eines aktivierten Teilnehmers (3) die übermittelten Zugriffsrechte-Einstellungen (16) prüfen und jedem Teilnehmer (4, 5), der eine Zugriffsrechte-Anforderung übermittelte, eine Zugriffsvergabe-Quittung mit Einstellungen (16) zum Einstellen der Zugriffsrechte in dem Teilnehmer (4, 5) zuführen.

5. Teilnehmernetz nach Anspruch 4, **dadurch gekennzeichnet, dass** die Mittel (11, 12, 13) die Einstellungen in einer Datei (17, 18) hinterlegen.

6. Teilnehmernetz nach Anspruch 4 oder 5, **dadurch gekennzeichnet, dass** die Mittel (11, 12, 13) die Einstellungen (16) visualisieren.

7. Teilnehmer, welcher zum Einsatz in einem Teilnehmernetz (1) nach einem der Ansprüche 4 bis 6 geeignet ist, wobei der Teilnehmer (3, 4, 5)
- mit Mitteln (12, 13) versehen ist, welche einem aktivierten Teilnehmer (3) des Teilnehmernetzes (1) eine Zugriffsrechte-Anforderung mit Zugriffsrechte-Einstellungen (16) übermitteln,
- Mittel (11) aufweist, welche zur Aktivierung des Teilnehmers (3) im Hinblick auf die Vergabe von Zugriffsrechten vorgesehen sind, wobei die Mittel (11) die übermittelten Zugriffsrechte-Einstellungen (16) eines Teilnehmers (4, 5) prüfen und diesem eine Zugriffsvergabe-Quittung mit Einstellungen (16) zum Einstellen der Zugriffsrechte zuführen.

8. Teilnehmer nach Anspruch 7, **dadurch gekennzeichnet, dass** die Mittel (11, 12, 13) die Einstellungen (16) in einer Datei (17, 18) hinterlegen.

9. Teilnehmer nach Anspruch 7 oder 8, **dadurch gekennzeichnet, dass** die Mittel (11, 12, 13) die Einstellungen (16) visualisieren.
